# EUROPEAN PATENT SPECIFICATION

(11) **EP 0 861 158 B1**
(45) Date of publication and mention of the grant of the patent: **18.07.2001**
(21) Application number: 96937424.8
(22) Date of filing: 08.11.1996
(51) Int. Cl.: B60B 21/02

(54) **The use of a tyre and rim assembly on a forklift truck or similar vehicle**
Die Verwendung einer Reifen-und-Felge-Kombination bei einem Gabelstapler oder einem ähnlichen Fahrzeug
Utilisation d'un assemblage pneu et jante dans un chariot élévateur à fourche ou un véhicule analogue

(30) Priority: 16.11.1995 GB 9523407
(43) Date of publication of application: 02.09.1998
(73) Proprietor: Grammercy Limited, London W1N 7RH (GB); Fishman, Jordan Sidney, Sarasota, FL 34242 (US)
(72) Inventor: FISHMAN, Jordan, Sidney, Sarasota, FL 34242 (US)
(74) Representative: Lawrence, John Gordon
(86) International application number: PCT/GB96/02737
(87) International publication number: WO 97/18097

(56) References cited:
- DE-C- 556 582
- FR-A- 2 154 790
- FR-A- 2 610 872

## Description

This invention concerns the use of a tyre and rim assembly on a forklift truck or similar vehicle.

Such vehicles ordinarily, in the interests of small size and manoeuvrability, have wheels of small diameter. Such vehicles also require brake drums of as large a diameter as possible, on account of their need to brake at frequent intervals, to ensure adequate stopping power, reasonable working life, and tolerable increases in brake temperature. The brake drums are ordinarily fitted within the rim inside diameter.

For these reasons, tyres having inner tubes on existing flat-base rims are normal, tubeless tyres requiring rims with deep annular wells (to enable fitting of the tyres) which necessarily reduce the diameter of brake drums which might otherwise be used.

Tyres with inner tubes and flaps are clearly more costly than tubeless tyres as are the multi-piece rims which carry them.

The present invention is based on an appreciation of the possibility of providing a heavy gauge wheel having a rim adapted to be fitted with a tubeless tyre and with the rim having an internal diameter comparable with or larger than that of a rim adapted to be fitted with a tyre of the kind having an inner tube by using a tyre of lower aspect ratio than has been used hitherto and at the same time maintaining the same outside diameter and width as a tube type tyre.

According to the invention the use of a tyre and rim assembly on a forklift truck or similar vehicle having the features of claim 1 is provided.

A series of tyres with the following dimensions exemplify preferred assemblies:

| **OD** ±7% | **TYRE WIDTH** ±7% | **RIM DIAMETER** ±10% |
|---|---|---|
| 33.5" (85cm) | 9.0" (22.8cm) | 23.0" (58.4cm) x 7.25 (18.4cm) |
| 26.5" (67cm) | 10.0" (25cm) | 17.5" (44.4cm) x 7.25 (18.4cm) |
| 26.5" (67cm) | 8.0" (20cm) | 17.5" (44.4cm) x 6.0 (15cm) |
| 23.0" (58.4cm) | 7.5" (19cm) | 15.0 (38cm) x 6.0 (15cm) |
| 21.0" (53cm) | 6.5" (16.5cm) | 14.0 (35.5cm) x 5.0 (12.2cm) |
| 18.0" (45.7cm) | 5.5" (14cm) | 12.0 (30.cm) x 4.25 (10.8cm) |

Whereas tyres having such low aspect ratios and special sizes would be quite unsuitable for many applications such as conventional highway truck tyres, they have advantage for the contemplated applications in providing for much greater stability for forklift trucks. Better braking because the use of larger brakes is possible. Also much higher carrying capacity.

For the avoidance of confusion, we hereby confirm that the term "aspect ratio" as used herein is the ratio of the radial thickness to the width of the tyre.

The tyre must have the fabric of its cross plies extending up the inner face of the side walls of the tyre to cover at least 30% of the height of the side walls. This additional stiffness will increase the tyre's stability.

The tyre must be inflated to a pressure of at least 9 bar (125 p.s.i.).

The invention will be further apparent from the following description, with reference to the figures of the accompanying drawing, which show, a conventional rim and tyre assembly and, by way of example only, one form of assembly embodying same.

### Of the drawing:

- Figure 1: shows a side view of a conventional assembly;
- Figure 2: shows a cross-section through the assembly on the line II-II of Figure 1;
- Figure 3: shows a side view of an assembly embodying the invention; and
- Figure 4: shows a cross-section through the assembly on the line IV-IV of Figure 3.

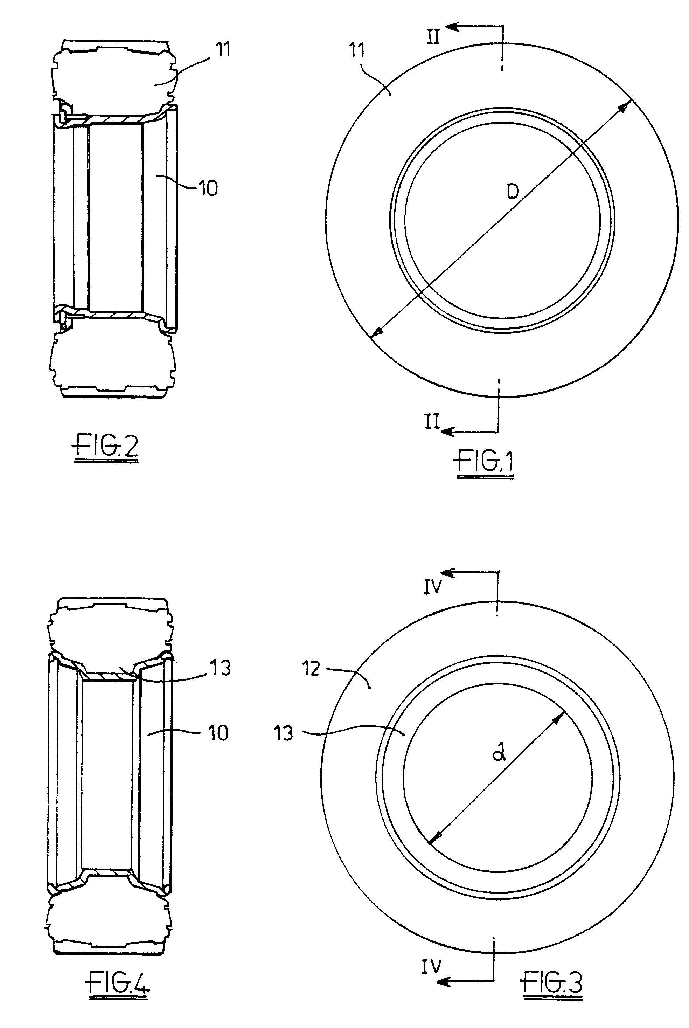

Referring now to the drawing, it will be seen that both assemblies have the same overall diameter D, as specified, and wheel rims 10 of the same internal diameter d.

On the conventional assembly, the tyre 11 has an inner tube and is seated on a rim of substantially constant diameter across its width.

On the assembly embodying the invention, the tyre 12 is tubeless and is seated on a rim having a central annular well 13 to enable fitting of the tyre.

The similarity of the dimensions D and d (or larger) on the two assemblies is possible because the assembly embodying the invention has a tyre of relatively small aspect ratio of 58% or less as exemplified by the following preferred possibilities:-

| **OD** ±7% | **TYRE WIDTH** ±7% | **RIM DIAMETER** ±10% |
|---|---|---|
| 33.5" (85cm) | 9.0" (22.8cm) | 23.0" (58.4cm) x 7.25 (18.4cm) |
| 26.5" (67cm) | 10.0" (25cm) | 17.5" (44.4cm) x 7.25 (18.4cm) |
| 26.5" (67cm) | 8.0" (20cm) | 17.5" (44.4cm) x 6.0 (15cm) |
| 23.0" (58.4cm) | 7.5" (19cm) | 15.0 (38cm) x 6.0 (15cm) |
| 21.0" (53cm) | 6.5" (16.5cm) | 14.0 (35.5cm) x 5.0 (12.2cm) |
| 18.0" (45.7cm) | 5.5" (14cm) | 12.0 (30.cm) x 4.25 (10.8cm) |

The tyre 12 has the fabric of its cross plies extending up the inner face of the side walls of the tyre to cover at least 30% of the height thereof.

The tyre 12 is to be inflated to a pressure of at least 9 bar (125 p.s.i.).

It will be appreciated that it is not intended to limit the invention to the above example only, many variations, such as might readily occur to one skilled in the art, being possible, without departing from the scope of the claim.

## Claims

1. Use of a tyre and rim assembly comprising a rim (10) having an annual well (13) to enable fitting of a tubeless tyre and the assembly furter comprising a cross-ply tyre (12) having an aspect ratio of 58% or less and having the fabric of its cross-plies extending up the inner face of the side walls of the tyre to cover at least 30% of the height of the side walls and inflated to a pressure of 9 bar 125 psi or more on a forklift truck or similar vehicle.

## Patentansprüche

1. Verwendung einer Reifen- und Felgenanordnung, welche eine Felge (10) mit einer ringförmigen Vertiefung (13) aufweist, um den Paßsitz eines schlauchlosen Reifens zu ermöglichen, und die Anordnung weiterhin einen Diagonalreifen (12) aufweist, der ein Verhältnis seiner radialen Dicke zu seiner Breite von 58% oder weniger hat und bei dem das Diagonalgewebe sich über die Innenfläche der Seitenränder des Reifens so erstreckt, daß es zumindest 30% der Höhe der Seitenwände überdeckt, und der auf einen Druck von 9 bar (125 psi) oder mehr bei einem Gabelstapler oder einem ähnlichen Fahrzeug aufgeblasen ist.

## Revendications

1. Application d'un ensemble à jante et pneumatique, comprenant une jante (10) possédant une cavité annulaire (13) destinée au montage d'un tube sans chambre, l'ensemble comprenant en outre un pneumatique (12) de type diagonal ayant un rapport d'allongement inférieur ou égal à 58 % et dont l'étoffe des nappes diagonales s'étend jusqu'à la face interne des flancs du pneumatique afin qu'elle recouvre au moins 30 % de la hauteur des flancs, le pneumatique étant gonflé à une pression supérieure ou égale à 9 bar (125 psi), à un chariot élévateur à fourche ou un véhicule analogue.
